# EUROPÄISCHE PATENTSCHRIFT

(11) **EP 0 568 776 B1**
(45) Veröffentlichungstag und Bekanntmachung des Hinweises auf die Patenterteilung: **16.04.1997**
(21) Anmeldenummer: 93102517.5
(22) Anmeldetag: 18.02.1993
(51) Int. Cl.: B60N 2/22, B60N 2/16, B60N 2/48

(54) **Ver- und Feststellvorrichtung für Sitze, insbesondere Kraftfahrzeugsitze**
Adjusting and locking device for seats, particularly motor vehicle seats
Dispositif de réglage et blocage pour sièges, en particulier pour sièges de véhicules automobiles

(30) Priorität: 07.04.1992 DE 4211617
(43) Veröffentlichungstag der Anmeldung: 10.11.1993
(73) Patentinhaber: KEIPER RECARO GmbH & Co., D-42824 Remscheid (DE)
(72) Erfinder: Wittig, Dr. Werner, Dipl.-Ing., W-6752 Winnweiler (DE); Angermann, Dirk, Dipl.-Ing., W-5000 Köln 80 (DE); Eich, Herbert, W-4050 Mönchengladbach (DE); Werner, Heinz, W-5630 Remscheid-Hasten (DE)
(74) Vertreter: Buse, Karl Georg, Dipl.-Phys.

(56) Entgegenhaltungen:
- EP-A- 0 406 089
- EP-A- 0 448 446
- FR-A- 2 578 601
- GB-A- 2 257 031

## Beschreibung

Die Erfindung betrifft eine Ver- und Feststelleinrichtung für Sitze, insbesondere Kraftfahrzeugsitze, zu deren Lehnenverstellung und/oder deren Sitzhöhen- und Sitzneigungsverstellung, und/oder deren Sitzlängenverstellung, und/oder deren Seitenwangenverstellung, und/oder deren Lendenstützenverstellung und/oder deren Kopfstützenverstellung, wobei ein fester Gelenkteil und ein die Verstellbewegung übertragender, verstellbarer Gelenkteil über ein die Lage dieser Gelenkteile zueinander bestimmendes, mittels des Exzenterabschnittes einer Schwenkachse antreibbares Getriebe miteinander verbunden sind, wobei der Exzenterabschnitt durch zwei gegeneinander geneigte, die Lagerstelle des verstellbaren Gelenkteiles bereichsweise umgreifende Keilsegmente gebildet ist, die von der Lagerstelle des festen Gelenkteiles durch ein Wälzlager umgriffen sind, und zwischen deren Schmalseiten ein Mitnehmer faßt, während zwischen deren Breitseiten ein diese im Sinne einer Radialspielreduzierung auseinanderdrückender Kraftspeicher angeordnet ist.

Aus der DE 30 13 304 C2 ist eine Ver- und Feststellvorrichtung für einen Gelenkbeschlag der eingangs genannten Art bekannt, bei dem der schwenkbare Gelenkteil auf zentrischen Abschnitten der Schwenkachse gleitgelagert ist. Infolge der den Exzenterabschnitt zusammen mit einem scheibenartigen Mitnehmer bildenden Keilsegmente, die durch einen Kraftspeicher auseinanderdrückbar sind, stellt sich bereits bei der Verstellbewegung der Gelenkteile zueinander ein die Einstellbewegung erleichterndes Spiel selbsttätig ein, welches sich bei Unterbrechung der Stellbewegung wiederum selbsttätig eliminiert. Allerdings läßt sich diese Stellbewegung nicht in optimaler Weise erreichen, da die Gleitlagerung auf der Schwenkachse Reibmomente erzeugt, die einer leichtgängigen Verstellung entgegenstehen. Außerdem ist das Anfangsstellmoment hoch, da auch die Gleitreibung an den Keilsegmenten überwunden werden muß.

Als eine die vorgenannte Vorrichtung weiterbildende Lösung offenbart die der Erfindung zugrundeliegende DE 39 41 215 A1 eine Ver- und Feststellvorrichtung bei einem Gelenkbeschlag, dessen Exzenterabschnitt der Schwenkachse ebenfalls von zwei einen scheibenartigen Mitnehmer bildenden Keilsegmenten und einem außerdem daneben angeordneten, Zentriersegment gebildet ist. Dabei dienen die durch einen Kraftspeicher auseinanderdrückbaren Keilsegmente der Sperrung der Gelenkteile im Feststellfall. Die Wirkung des Kraftspeichers ist bei der Verstellphase aufhebbar, in welcher sich der am Exzenterabschnitt abgestützte Gelenkteil dann am Zentrierabschnitt abstützt. Dabei läßt sich das Zentriersegment als Buchse ausbilden, zwischen deren sich in axialer Richtung erstreckender Innenwandung und der die Schwenkachse bildenden Lagerbuchse die Keilsegmente angeordnet und gleitreibschlüssig abgestützt sind. Das buchsenartig gestaltete und im buchsenartigen Bereich die Keilsegmente aufnehmende Zentriersegment ist an seinem Außenmantel zur leichtgängigen Verstellung von einem Wälzlager umgriffen, das in der Lagerstelle des festen, mit dem Sitzteil verbindbaren Gelenkteil mit Festsitz angeordnet ist. Da jedoch die Keilsegmente unter Gleitreibschluß im buchsenartigen Zentriersegment angeordnet sind ist bei Beginn der Stellphase eine hohe Betätigungskraft anzuwenden, um die Keilsegmente aus ihrer Verspannung zu lösen.

Zur Verbesserung der Leichtgängigkeit der Stellbewegung wurde außerdem mit der DE 41 19 980 A1 eine Lösung vorgeschlagen, bei welcher die Keilsegmente einen Mitnehmertopf der Schwenkachse bereichsweise umgreifen, und in dem Mitnehmertopf ein Wälzlager angeordnet wurde, an welchem der der Rückenlehne zugehörige Gelenkteil gelagert ist, während der dem Sitzteil zugeordnete feste Gelenkteil die Keilsegmente umgreift. Obschon diese Lösung die Gleitverhältnisse des Gelenkbeschlages verbessert, läßt seine Leichtgängigkeit während der Verstellphase und insbesondere am Beginn dieser Verstellphase immer noch zu wünschen übrig.

Aus der FR 2 578 601 ist zwar eine Lösung ersichtlich, bei welcher der Exzenterabschnitt der Schwenkachse in einem Wälzlager gelagert ist, jedoch sind bei dieser Lösung keine Keilsegmente vorhanden und die Wälzkörper sind als eigenständige Nadeln lose zwischen dem Exzenterabschnitt und einem Ring angeordnet. Die aus der EP 0 406 089 A1 und EP 0 448 446 A2 ersichtlichen Wälzlager umrunden als Kugelkränze einen Zwischenring, an dessen Innenmantel Keilsegmente abgestützt sind, so daß zwischen dem Zwischenring und den Keilsegmenten Gleitreibung auftritt.

Die Aufgabe der vorliegenden Erfindung besteht darin, einen Gelenkbeschlag hinsichtlich seiner Leichtgängigkeit während der Verstellphase, besonders aber zu Beginn dieser Verstellphase zu optimieren, im Feststellfall die Spielfreiheit an der Eingriffsstelle der Verzahnungen und deren Lagerstellen zu erhalten, und trotzdem das Ablaufen der Rückenlehne zu verhindern.

Diese Aufgabe ist mit den im Kennzeichen der Ansprüche 1 und/oder 2 genannten Merkmalen gelöst. Dabei ist die durch den Anspruch 2 gekennzeichnete Ver- und Feststellvorrichtung im Bereich ihres Exzenterabschnittes durch ein den Keilsegmenten nebengeordnetes, auf der Schwenkachse bereichsweise abgestützes, sichelförmiges Zentriersegment ergänzt. Mit diesen Lösungen ist es gelungen, die Reibverhältnisse im Bereich der Keilsegmente und auch im Bereich des ggf. vorhandenen Zentriersegmentes wesentlich zu reduzieren, weil bei der vorgeschlagenen Lösung nur die Innenseite der Keilsegmente und des ggf. vorhandenen Zentriersegmentes Gleitreibung erfährt, während die Außenseite der Keilsegmente und des Zentriersegmentes durch Rollreibung am festen Gelenkteil abgestützt ist. Überdies findet die Gleitreibung gegenüber der Rollreibung an einem durchmesserkleineren Bereich statt.

Obschon des denkbar ist, als Wälzlager auch Kugellager (ggf. zwei Kugellager nebeneinander) einzusetzen, so ist es insbesondere aus wirtschaftlicher Sicht vorteilhaft, als Wälzlager ein Nadellager ohne Innenring einzusetzen, dessen die Wälzlager bildenden Nadeln in einem Außenring gehaltert sind, der mit Festsitz im festen Gelenkteil angeordnet ist.

Im Falle der Verwendung von Nadeln als Wälzkörper können die Nadeln so lang sein, daß sowohl der Außenumfang der Keilsegmente als auch der Außenumfang des Zentriersegmentes in voller Breite übergriffen sind. Es mag allerdings auch genügen, wenn der Außenumfang der Keilsegmente und des Zentriersegmentes nur auf einen Teilbereich ihrer Breite von den Nadeln tangiert werden.

Das Wälzlager läßt sich allerdings auch aus einem Nadellaufring und aus einem Kugellaufring bilden, wobei sich die Nadeln des Nadellaufringes am Außenumfang der Keilsegmente abstützen und der Kugellaufring sich auf dem Zentriersegment abstützt. Dabei ist es vorteilhaft den Kugellaufring zwischen einem Außenring und einem Innenring anzuordnen, wobei der Innenring das Zentriersegment umgreift. Allerdings läßt sich auch die Verwendung von Nadellaufring und Kugellaufring umkehren.

Sowohl die Nadeln als auch die Kugeln können zur Aufrechterhaltung ihrer Lage zueinander in einem Käfig in bekannter und üblicher Weise angeordnet sein.

Der die Keilsegmente zu ihrer leichtgängigen Verstellung beaufschlagende Mitnehmer ist vorteilhaft aus einer Scheibe mit einem zwischen die Keilsegmente fassenden, von der Scheibe abragenden Mitnehmerfinger gebildet. Dabei ist die Scheibe des Mitnehmers vorteilhaft drehfest mit einer als Schwenkachse fungierenden Übetragungshülse verbunden, die ihrerseits in einer dem schwenkbaren Gelenkteil zugehörigen Buchse gelagert ist. Auf dieser Buchse stützen sich die Keilsegmente mit ihren inneren Anlageflächen ab.

Die Erfindung ist beispielsweise für Gelenkbeschläge geeignet, wovon Ausführungen auf der Zeichnung dargestellt sind, die nachfolgend näher erläutert werden. Es zeigen:
- **Fig.1**: einem die Ver- und Feststellvorrichtung aufweisenden Gelenkbeschlag in einer aufgebrochenen Schnittdarstellung der Seitenansicht, wobei allein Keilsegmente verwendet sind, und der Schnitt nach Linie I - I von Fig. 2 geführt ist,
- **Fig.2**: den aus Fig. 1 ersichtlichen Gelenkbeschlag in einem Längsschnitt nach der Linie II - II von Fig. 1,
- **Fig.3**: den zentralen Bereich eines weiteren, die Ver- und Feststellvorrichtung aufweisenden Gelenkbeschlages in einem der Fig. 2 analogen Längsschnitt, bei dem neben den Keilsegmenten auch ein Zentriersegment Verwendung findet,
- **Fig.4**: eine Querschnittsansicht der Ver- und Feststelleinrichtung im Schnitt nach der Linie IV - IV von Fig. 3, mit der Darstellung der federbelasteten Keilsegmente in Sperrstellung,
- **Fig.5**: den Querschnitt der Ver- und Feststellvorrichtung im Schnitt nach der Linie V - V von Fig. 3 mit der Darstellung des Zentriersegments während der Stellphase,
- **Fig.6**: den zentralen Bereich eines weiteren Ausführungsbeispiels einer Ver- und Feststellvorrichtung in einer den Fig. 2 und 3 analogen Darstellung, jedoch in etwas größerem Maßstab, wobei das den Exzenterabschnitt umfassende Wälzlager aus einer Kombination von Nadel- und Kugellager besteht.

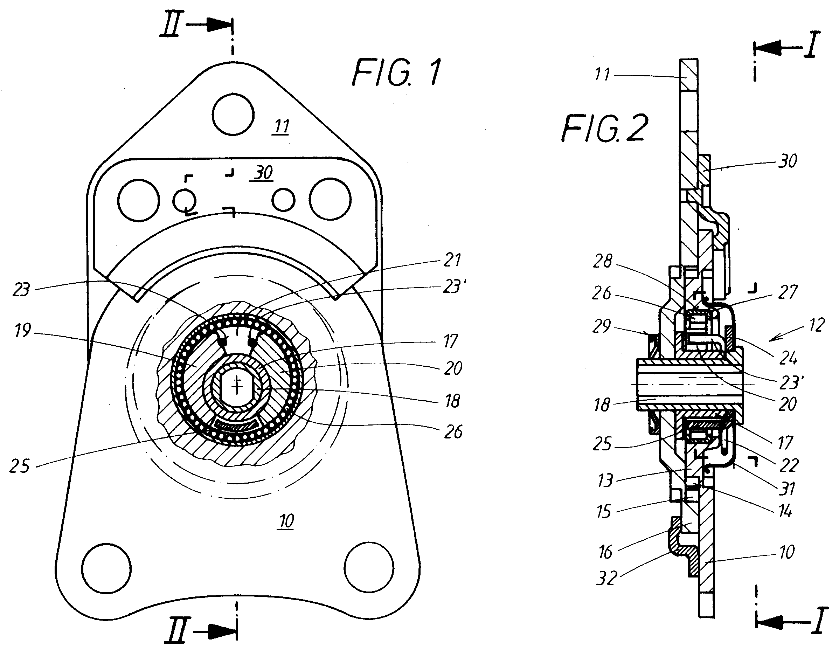

Der aus den Fig. 1 und 2 ersichtliche, eine Ver- und Feststellvorrichtung aufweisende Gelenkbeschlag ist in bekannter Weise zwischen dem Sitzteil und der Rückenlehne eines Fahrzeugsitzes angeordnet und dient der Einstellung und Festlegung der Neigungslage der Rückenlehne gegenüber dem Sitzteil. Der Gelenkbeschlag umfaßt im wesentlichen einen mit dem Sitzteil verbundenen, festen Gelenkteil 10 und einen mit der Rückenlehne verbundenen, schwenkbaren Gelenkteil 11, die durch eine Stellvorrichtung 12 miteinander verbunden sind. Diese Stellvorrichtung umfaßt ein beispielsweise durch Ausprägen aus dem Blechzuschnitt des Gelenkteiles 10 gebildetes Stirnrad 13 mit einer Außenverzahnung 14, die mit der Innenverzahnung 15 eines beispielsweise ebenfalls durch Ausprägen aus einem Blechzuschnitt gebildeten Zahnkranzes 16 des Gelenkteiles 11 kämmt. Der Durchmesser des Kopfkreises der Außenverzahnung 14 des Stirnrades 13 um wenigstens eine Zahnhöhe kleiner als der Durchmesser des Fußkreises der Innenverzahnung 15 des Zahnkranzes 16. Demgemäß weisen die Verzahnungen 14 und 15 unterschiedliche Zähnezahlen auf, die sich um wenigstens einen Zahn unterscheiden, wobei die Zähnezahl der Innenverzahnung 15 größer ist als die Zähnezahl der Außenverzahnung 14. Dabei ist die Anordnung derart gewählt, daß sich die Innenverzahnung des Gelenkteiles 11 auf der Außenverzahnung des Gelenkteiles 10 abwälzen kann.

Mit dem der Rückenlehne zugehörigen schwenkbaren Gelenkteil 11 ist eine Buchse 17 in einer zum Zahnkranz 16 konzentrischen Lage fest verbunden, in der eine Übetragungshülse 18 drehbar gelagert ist. Der Außenmantel der Buchse 17 ist bereichsweise auf einander gegenüberliegenden Seiten von Keilsegmenten 19 und 20 umfaßt, wobei in den Zwischenraum 21 zwischen den Keilsegmenten 19 und 20 die abgewinkelten Schenkel 23 und 23' einer als Kraftspeicher fungierenden Schenkelfelder 22 fassen und die Keilsegmente 19 und 20 in Richtung auf ihre Schmalseiten hin auseinanderdrücken. In den dem Zwischenraum 21 gegenüberliegenden Zwischenraum zwischen den Keilsegmenten 19 und 20 an deren Schmalseiten greift der Mitnehmerfinger 25 eines mit der Übertragungshülse 18 drehfest verbundenen, scheibenförmigen Mitnehmers 24, der bei Einleitung einer Stellbewegung in die Übertragungshülse 18 das seiner Drehbewegung entgegenstehende Keilsegment in Löserichtung beaufschlagt.

Die Keilsegmente 19 und 20 bilden auf der Buchse 17 einen exzentrischen Abschnitt und sind von einem Wälzlager 26 umgriffen. Dieses Wälzlager 26 ist durch eine Nadelhülse gebildet, in deren Außenring 27 die Nadeln gehaltert sind, wobei der Außenring 27 seinerseits fest in die konzentrisch zum Stirnrand 13 eingebrachte Bohrung 28 im Gelenkteil 10 eingepaßt ist. Der axiale Zusammenhalt der Gelenkteile 10 und 11 erfolgt über Haltebleche 30 und 32, wovon das Halteblech 30 am Gelenkteil 11 festgelegt ist und den Gelenkteil 10 bereichsweise übergreift, während das am Gelenkteil 10 befestigte Halteblech 32 den Gelenkteil 11 bereichsweise übergreift. Im Gelenkaugenbereich wird der axiale Zusammenhalt des Gelenkbeschlages durch einen an der Übertragungshülse 18 angeordneten, die Mitnehmerbohrung des Mitnehmers 24 überragenden Kragen in Verbindung mit einer an der Übertragungshülse 18 festgelegten Sicherungsscheibe 29 unterstützt, wodurch der Mitnehmer 24, die Schenkelfelder 22 sowie die Keilsegmente 19 und 20 in ihrer axialen Lage gesichert sind. Ein zwischen dem Mitnehmer 24 und dem Kragen der Übertragungshülse 18 angeordneter Abdecktopf 31 dient dem Schutz der darunterliegenden Bauteile beispielsweise bereits bei der Lackierung des Gelenkbeschlages.

Wenn nun in die Übertragungshülse 18 der aus den Fig. 1 und 2 ersichtlichen Vorrichtung durch eine nicht dargestellte Handhabe oder einen ebenfalls nicht dargestellten motorischen Antrieb eine Drehbewegung eingeleitet wird, so wird die in Drehrichtung nächstliegende, schmale Stirnfläche eines Keilsegmentes gegen die Rückstellkraft der Schenkelfelder 22 vom Mitnehmerfinger 25 beaufschlagt, wodurch sofort eine geringfügige Abnahme der durch die Keilsegmente 19 und 20 erzeugten Exzentrizität zwischen den beiden Gelenkteilen 10 und 11 erfolgt, so daß bei Weiterdrehung infolge der Abstützung der Keilsegmente an den Nadeln des Wälzlagers 26 ein leichtgängiges Abwälzen der Zahneingriffsstelle zwischen der Außenverzahnung 14 des Stirnrades 13 des festen Gelenkteiles 10 und der Innenverzahnung 15 des Zahnkranzes 16 des schwenkbaren Gelenkteiles 11 möglich ist. Dabei wälzen sich die Keilsegmente 19 und 20 an den Nadeln des Nadellagers 26 unter Rollreibung ab, während die Buchse 17 des schwenkbaren Gelenkteiles 11 unter Gleitreibung am Innenumfang der Keilsegmente 19 und 20 abgestützt ist. Damit ist die insgesamt wirksame Reibung gegenüber den bisherigen bekannten Gelenkbeschlägen wesentlich reduziert, so daß eine leichtgängige Verstellung des Gelenkbeschlages während der Verstellphase möglich ist. Bei Unterbrechung der in die Übertragungshülse eingeleiteten Drehbewegung drücken in bekannter Weise die Schenkel 23 und 23' der Schenkelfelder 22 die Keilsegmente 19 und 20 wieder in die aus der Fig. 1 ersichtliche Lage, in welcher das Radialspiel sowohl in der Verzahnung als auch in den Lagerstellen eliminiert ist, und eine spielfreie Anordnung der Gelenkteile 10 und 11 erzielt wird.

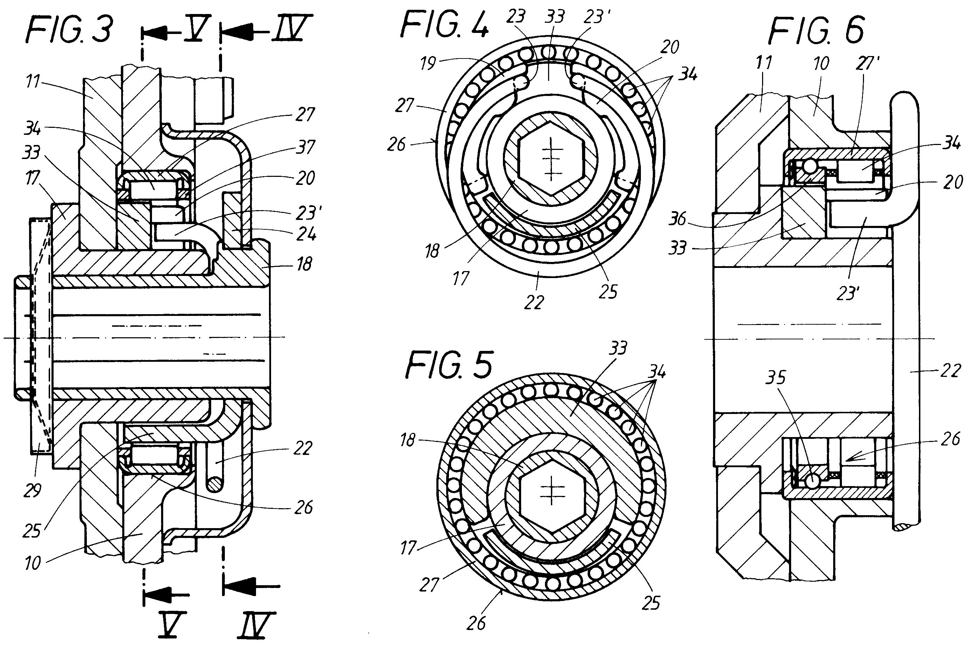

Bei der Lösung gemäß den Fig. 1 und 2 stützt sich der Gelenkteil 10 über das Wälzlager 26 sowohl während der Verstellphase als auch in Ruhelage,d.h. während der Sperrphase, auf den Keilsegmenten ab. Zur Verbesserung des Laufverhaltens während der Verstellphase wurde bereits gemäß der eingangs genannten DE 39 41 215 A1 vorgeschlagen neben den Keilsegmenten ein Zentriersegment zu benutzen, das den Gelenkteil während der Verstellphase stützt. Diesen Vorzug machen sich die aus den Fig. 3 bis 6 ersichtlichen beiden Ausführungsformen zunutze, bei denen jedoch zur Leichtgängigkeit während der Verstellphase die Wälzkörper des Wälzlagers 26 auch auf dem Zentriersegment 33 direkt oder indirekt abgestützt sind.

Wie aus den Figuren 3 bis 5 des zweiten Ausführungsbeispieles ersichtlich ist, stimmt der Aufbau und die Anordnung der Bauteile im wesentlichen mit der aus den Fig. 1 und 2 ersichtlichen Ausführungsform überein. Auch bei der Lösung nach den Fig. 3 bis 5 ist eine Buchse 17 drehfest mit dem einen Zahnkranz aufweisenden Gelenkteil 11 verbunden, wobei der Außenmantel der Buchse 17 von zwei aufeinander gegenüberliegenden Seiten angeordneten Keilsegmenten 19 und 20 bereichsweise umgriffen ist. In axialer Richtung ist unmittelbar neben den Keilsegmenten 19 und 20 zwischen diesen und dem Gelenkteil 11 außerdem ein Zentriersegment 33 angeordnet, das ebenfalls den Außenmantel der Buchse 17 bereichsweise umgreift und zusammen mit den Keilsegmenten 19 und 20 einen Exzenterabschnitt gegenüber dem Zentrum der aus Buchse 17 und Übertragungshülse 18 gebildeten Schwenkachse darstellt. Auch die Keilsegmente 19 und 20 dieser Ausführungsform werden durch die Schenkel 23 und 23'einer Schenkelfelder 22 auseinandergedrückt.

Der Außenumfang sowohl des Zentriersegments 33 als auch der Keilsegmente 19 und 20 ist von einem Wälzlager 26 umfaßt, das als Nadellager ausgebildet ist, dessen Nadeln 34 in einem Außenring 27 beispielsweise mittels eines Käfigs 37 gehaltert und gelagert sind und die sich unmittelbar auf dem Zentriersegment 33 und den Keilsegmenten 19 und 20 an deren jeweiligem Außenumfang abstützen. Auch bei dieser Ausführung ist mit der Übertragungshülse 18 ein Mitnehmer 24 drehfest verbunden, der mit einem Mitnehmerfinger 25 zwischen die Schmalseiten der Keilsegmente 19 und 20 faßt.

Wie insbesondere aus Fig. 4 zu entnehmen ist, wurde das Zentriersegment 33 so ausgebildet, daß im Sperrzustand etwas Spiel zwischen dem Außenumfang des Zentriersegmentes 33 und den die Wälzkörper bildenden Nadeln 34 im Bereich des Exzenterhöchstpunktes vorhanden ist, um bei gemäß Fig. 5 vorhandener Stellphase auch ein Spiel durch Radialverschiebung der Gelenkteile zueinander in der Verzahnung 14, 15 erzeugen zu können.

Das aus Fig. 6 ersichtliche Ausführungsbeispiel entspricht im wensentlichen der aus den Fig. 3 bis 5 ersichtlichen Ausführungsform mit dem Unterschied, daß das Wälzlager 26 als kombiniertes Nadel/Kugellager ausgebildet ist. Obschon ein Nadellager ohne Innenring und ein Kugellager als Einzelbauteile nebeneinander angeordnet werden könnten, wurde bei der aus Fig. 6 ersichtlichen Ausführung in einem gemeinsamen Außenring 27'einerseits ein Laufring aus Nadeln 34 und andererseits ein Laufring aus Kugeln 35 gebildet. Dabei sind die Kugeln 35 zwischen dem Außenring 27'und einem Innenring 36 angeordnet. Während die Nadeln 34 den Außenumfang der Keilsegmente 20 umgreifen, dient der die Kugeln 35 stützende Innenring 36 der Umfassung allein des Zentriersegmentes 33.

### Bezugszeichenliste

- 10: Gelenkteil, fest
- 11: Gelenkteil, schwenkbar
- 12: Stellvorrichtung
- 13: Stirnrad
- 14: Außenverzahnung
- 15: Innenverzahnung
- 16: Zahnkranz
- 17: Buchse
- 18: Übertragungshülse
- 19: Keilsegment
- 20: Keilsegment
- 21: Zwischenraum
- 22: Schenkelfelder/Kraftspeicher
- 23: Schenkel
- 23': Schenkel
- 24: Mitnehmer
- 25: Mitnehmerfinger
- 26: Wälzlager/Nadellager
- 27: Außenring
- 27': Außenring
- 28: Bohrung, in 13 von 10
- 29: Sicherungsscheibe
- 30: Halteblech
- 31: Abdecktopf
- 32: Halteblech
- 33: Zentriersegment
- 34: Nadeln, von 26
- 35: Kugel
- 36: Innenring
- 37: Käfig

## Patentansprüche

1. Ver- und Feststelleinrichtung für Sitze, insbesondere Kraftfahrzeugsitze, zu deren Lehnenverstellung und/oder Sitzhöhen- und Sitzneigungsverstellung, und/oder deren Sitzseitenwangenverstellung und/oder deren Lendenstützenverstellung und/oder deren Kopfstützenverstellung, wobei ein fester Gelenkteil (10) und ein die Verstellbewegung übertragender, verstellbarer Gelenkteil (11) über ein die Lage dieser Gelenkteile (10, 11) zueinander bestimmendes, mittels des Exzenterabschnittes einer Schwenkachse (17, 18) antreibbares Getriebe miteinander verbunden sind, wobei der Exzenterabschnitt durch zwei gegeneinander geneigte, die Lagerstelle des verstellbaren Gelenkteils (11) bereichsweise umgreifende Keilsegmente (19, 20) gebildet ist, die von der Lagerstelle des festen Gelenkteiles (10) durch ein Wälzlager (26) umgriffen sind, und zwischen deren Schmalseiten ein Mitnehmer (24) faßt, während zwischen deren Breitseiten ein diese im Sinne einer Radialspielreduzierung auseinanderdrückender Kraftspeicher (22) angeordnet ist,
**dadurch gekennzeichnet,**
daß die Keilsegmente (19, 20) an ihrem Außenumfang von den Wälzkörpern des Wälzlagers (26) - ausschließlich Rollreibung am Außenumfang erzeugend - umgriffen sind, wobei die Wälzkörper in einem Ring gehaltert sind.

2. Ver- und Feststelleinrichtung für Sitze, insbesondere Kraftfahrzeugsitze, zu deren Lehnenverstellung und/oder deren Sitzhöhen- und Sitzneigungsverstellung und/oder deren Sitzseitenwangenverstellung und/oder deren Lendenstützenverstellung und/oder deren Kopfstützenverstellung, wobei ein fester Gelenkteil (10) und ein die Verstellbewegung übertragender, verstellbarer Gelenkteil (11) über ein die Lage dieser Gelenkteile (10, 11) zueinander bestimmendes, mittels des Exzenterabschnittes einer Schwenkachse (17, 18) antreibbares Getriebe miteinander verbunden sind, wobei der Exzenterabschnitt durch zwei gegeneinander geneigte, die Lagerstelle des verstellbaren Gelenkteiles bereichsweise umgreifende Keilsegmente (19, 20) und durch ein den Keilsegmenten (19, 20) nebengeordnetes, sichelförmiges Zentriersegment (33) gebildet ist, die von der Lagerstelle des festen Gelenkteiles (10) durch ein Wälzlager (26) umgriffen sind, und zwischen die Schmalseiten der Keilsegmente (19, 20) ein Mitnehmer (24) faßt, während zwischen deren Breitseiten ein diese im Sinne einer Radialspielreduzierung auseinanderdrückender Kraftspeicher (22) angeordnet ist,
**dadurch gekennzeichnet,**
daß sich die Wälzkörper (26) des Wälzlagers am Außenumfang sowohl der Keilsegmente (19, 20) als auch des Zentriersegmentes (33) zwecks Erzeugung einer Rollreibung abstützen, wobei die Wälzkörper in einem Ring gehaltert sind.

3. Ver- und Feststelleinrichtung nach Anspruch 1 oder 2, dadurch gekennzeichnet, daß als Wälzlager (26) ein Nadellager ohne Innenring eingesetzt ist, dessen Außenring (27) mit Festsitz im festen Gelenkteil (10) angeordnet ist, und der die Wälzkörper bildenden Nadeln haltert.

4. Ver- und Feststelleinrichtung nach Anspruch 2 oder 3, dadurch gekennzeichnet, daß das Wälzlager (26) aus einem Nadellaufring einerseits und aus einem Kugellaufring andererseits gebildet ist, wobei sich die Nadeln (34) des Nadellaufringes am Außenumfang der Keilsegmente und der Kugellaufring (35) auf dem Zentriersegment (22) abstützt.

5. Ver- und Feststelleinrichtung nach Anspruch 4, dadurch gekennzeichnet, daß der Kugellaufring zwischen einem Außenring (27) und einem Innenring (36) angeordnet ist und der Innenring (36) das Zentriersegment (33) umgreift.

6. Ver- und Feststelleinrichtung nach einem der vorhergehenden Ansprüche, dadurch gekennzeichnet, daß der Mitnehmer (24) aus einer Scheibe mit einem zwischen die Keilsegmente (19, 20) fassenden, von der Scheibe abragenden Mitnehmerfinger (25) gebildet ist.

7. Ver- und Feststelleinrichtung nach Anspruch 6, dadurch gekennzeichnet, daß die Scheibe des Mitnehmers (24) drehfest mit einer Übertragungshülse (18) verbunden ist, die ihrerseits in einer dem schwenkbaren Gelenkteil (119 zugehörigen Buchse (17) gelagert ist.

## Claims

1. An adjusting and locking device for seats, in particular motor vehicle seats, for backrest adjustment and/or seat height and seat inclination adjustment thereof and/or for seat side portion adjustment thereof and/or for lumbar support adjustment thereof and/or for headrest adjustment thereof, wherein a fixed pivot member (10) and an adjustable pivot member (11) which transmits the adjusting movement are connected together by way of a transmission means which determines the position of said pivot members (10, 11) relative to each other and which is drivable by means of the eccentric portion of a pivot spindle (17, 18), wherein the eccentric portion is formed by two wedge segments (19, 20) which are inclined relative to each other and which extend in a region-wise manner around the mounting location of the adjustable pivot member (11) and which are embraced by the mounting location of the fixed pivot member (10) by a rolling bearing (26) and between whose narrow sides an entrainment means (24) engages while arranged between the wide sides thereof is a force storage means (22) which urges them away from each other in the direction of a reduction in radial play, characterised in that at their outside periphery the wedge segments (19, 20) are embraced by the rolling bodies of the rolling bearing (26) - producing exclusively rolling friction at the outside periphery - , the rolling bodies being mounted in a ring.

2. An adjusting and locking device for seats, in particular motor vehicle seats, for backrest adjustment and/or seat height and seat inclination adjustment thereof and/or for seat side portion adjustment thereof and/or for lumbar support adjustment thereof and/or for headrest adjustment thereof, wherein a fixed pivot member (10) and an adjustable pivot member (11) which transmits the adjusting movement are connected together by way of a transmission means which determines the position of said pivot members (10, 11) relative to each other and which is drivable by means of the eccentric portion of a pivot spindle (17, 18), wherein the eccentric portion is formed by two wedge segments (19, 20) which are inclined relative to each other and which extend in a region-wise manner around the mounting location of the adjustable pivot member (11) and by a sickle-shaped centering segment (33) arranged beside the wedge segments (19, 20), which are embraced by the mounting location of the fixed pivot member (10) by a rolling bearing (26) and an entrainment means (24) engages between the narrow sides of the wedge segments (19, 20) while arranged between the wide sides thereof is a force storage means (22) which urges them away from each other in the direction of a reduction in radial play, characterised in that the rolling bodies (26) of the rolling bearing are supported on the outside periphery both of the wedge segments (19, 20) and also of the centering segment (33) for the purposes of producing a rolling friction, the rolling bodies being mounted in a ring.

3. An adjusting and locking device according to claim 1 or claim 2 characterised in that the rolling bearing (26) used is a needle bearing without inner ring whose outer ring (27) is arranged with a firm fit in the fixed pivot member (10) and which mounts the needles forming rolling bodies.

4. An adjusting and locking device according to claim 2 or claim 3 characterised in that the rolling bearing (26) is formed from a needle race on the one hand and a ball race on the other hand, wherein the needles (34) of the needle race are supported on the outside periphery of the wedge segments and the ball race (35) is supported on the centering segment (22).

5. An adjusting and locking device according to claim 4 characterised in that the bell race is arranged between an outer ring (27) and an inner ring (36) and the inner ring (36) embraces the centering segment (33).

6. An adjusting and locking device according to one of the preceding claims characterised in that the entrainment means (24) is formed from a disc with an entrainment finger (25) which projects from the disc and which engages between the wedge segments (19, 20).

7. An adjusting and locking device according to claim 6 characterised in that the disc of the entrainment means (24) is non-rotatably connected to a transmission sleeve (18) which in turn is mounted in a bush (17) associated with the pivotable pivot member (11).

## Revendications

1. Dispositif de réglage et de blocage pour sièges, en particulier pour sièges de véhicules automobiles, afin de permettre le réglage du dossier et/ou de la hauteur et de l'inclinaison de l'assise, et/ou le réglage des appuis latéraux de l'assise, et/ou le réglage de l'appui lombaire, et/ou le réglage de l'appui-tête, du siège, dans lequel une partie d'articulation fixe (10) et une partie d'articulation réglable (11) transmettant le déplacement de réglage, sont reliées l'une à l'autre par l'intermédiaire d'un engrenage susceptible d'être entraîné par le tronçon excentrique d'un axe de pivotement (17, 18) et déterminant la position de ces parties excentriques (10, 11) l'une par rapport à l'autre, le tronçon excentrique étant constitué par deux segments de coin (19, 20) inclinés en sens inverse l'un de l'autre, entourant localement l'emplacement de palier de la partie d'articulation réglable (11), qui sont entourés depuis l'emplacement de palier de la partie d'articulation fixe (10) par un palier à roulement (26), et entre les faces étroites desquels coins s'engage un organe d'entraînement (24), tandis qu'est disposé entre leurs faces larges un organe de mise en réserve d'effort (22) les repoussant à distance l'un de l'autre dans le sens d'une réduction du jeu radial, caractérisé en ce que les segments de coin (19, 20) sont entourés à leur périphérie extérieure par les corps de roulement du palier à roulement (26) - créant exclusivement une résistance au roulement à la périphérie extérieure-, ces corps de roulement étant maintenus par une bague.

2. Dispositif de réglage et de blocage pour sièges, en particulier pour sièges de véhicules automobiles, afin de permettre le réglage du dossier et/ou de la hauteur et de l'inclinaison de l'assise, et/ou le réglage des appuis latéraux de l'assise, et/ou le réglage de l'appui lombaire, et/ou le réglage de l'appui-tête, du siège, dans lequel une partie d'articulation fixe (10) et une partie d'articulation réglable (11) transmettant le déplacement de réglage, sont reliées l'une à l'autre par l'intermédiaire d'un engrenage susceptible d'être entraîné par le tronçon excentrique d'un axe de pivotement (17, 18) et déterminant la position de ces parties excentriques (10, 11) l'une par rapport à l'autre, le tronçon excentrique étant constitué par deux segments de coin (19, 20) inclinés en sens inverse l'un de l'autre, entourant localement l'emplacement de palier de la partie d'articulation réglable et par un segment de centrage (33) en forme de croissant et placé à côté des segments de coin (19, 20) qui sont entourés, depuis l'emplacement de palier de la partie d'articulation fixe (10), par un palier à roulement (26), et entre les faces étroites desquels coins s'engage un organe d'entraînement (24), tandis qu'est disposé entre les faces larges un organe de mise en réserve d'effort (22) les repoussant à distance l'un de l'autre dans le sens d'une réduction du jeu radial, caractérisé en ce que les corps de roulement (26) du palier à roulement s'appuient sur la périphérie extérieure des segments de coin (19, 20) ainsi que sur celle du segment de centrage (33) afin de créer une résistance au roulement, les corps de roulement étant maintenus dans une bague.

3. Dispositif de réglage et de blocage selon la revendication 1 ou 2, caractérisé en ce que le palier de roulement (26) est un palier à aiguilles ou à rouleaux monté sans bague intérieure, dont la bague extérieure (27) est montée fixe dans la partie d'articulation fixe (10) et maintient les aiguilles ou rouleaux constitutant les corps de roulement.

4. Dispositif de réglage et de blocage selon la revendication 2 ou 3, caractérisé en ce que le palier de roulement (26) est constitué d'une part d'une piste à aiguilles ou à rouleaux et d'autre part, d'une piste à billes, les rouleaux ou aiguilles (34) de la piste à aiguilles ou à rouleaux s'appuyant sur la périphérie extérieure des segments de coin et la piste annulaire à billes (35) s'appuyant sur le segment de centrage (33).

5. Dispositif de réglage et de blocage selon la revendication 4, caractérisé en ce que la piste annulaire à billes est disposée entre une bague extérieure (27) et une bague intérieure (36) et en ce que la bague intérieure (36) entoure le segment de centrage (33).

6. Dispositif de réglage et de blocage selon l'une des revendications précédentes, caractérisé en ce que l'organe d'entraînement (24) est constitué d'un disque présentant un doigt d'entraînement (25) qui fait saillie du disque et qui vient se monter entre les segments de coin (19, 20).

7. Dispositif de réglage et de blocage selon la revendication 6, caractérisé en ce que le disque de l'organe d'entraînement (24) est relié rigidement en rotation à un manchon de transmission (18), qui, de son côté, est monté à rotation dans un manchon (17) appartenant à la partie d'articulation pivotante (11).
